# FASCICULE DE BREVET EUROPEEN

(11) **EP 1 286 038 B1**
(45) Date de publication et mention de la délivrance du brevet: **11.05.2005**
(21) Numéro de dépôt: 02291855.1
(22) Date de dépôt: 23.07.2002
(51) Int. Cl.: F02K 9/50, F17C 7/04

(54) **Système autonome de fourniture de gaz de travail, utilisation d'un tel système pour pressuriser un conteneur, et étage de lanceur intégrant un tel système**
Selbständiges Arbeitsgasversorgungssystem, Nutzung eines solchen Systems zur Unterdrucksetzung eines Behälters, mit solche einem System ausgerüsteter Rakentenwerfer
Autonomous working gas supply system, use of such a system to pressurize a container, laucher stage including such a system

(30) Priorité: 10.08.2001 FR 0110737
(43) Date de publication de la demande: 26.02.2003
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: Sturm, Etienne, 38000 Grenoble (FR)
(74) Mandataire: Le Moenner, Gabriel

(56) Documents cités:
- US-A- 2 935 846
- US-A- 3 692 459
- US-A- 3 779 009
- US-A- 3 803 858
- US-A- 4 132 165
- US-A- 6 047 541
- US-A- 6 073 437

## Description

La présente invention concerne les systèmes autonomes de fourniture de gaz de travail sous pression et en particulier les systèmes embarqués de pressurisation de réservoirs d'ergol, notamment pour les étages de lanceurs à moteurs cryotechniques. Un tel système est divulgué par US 3 803 858, considéré comme document divulguant l'art antérieur le plus proche.

En effet, à titre d'exemple, dans les étages cryotechniques de lanceurs, où le moteur brûle un mélange d'hydrogène gazéifié et d'oxygène liquide, la pressurisation du réservoir d'oxygène liquide est classiquement réalisée, pour des raisons de masse et de fiabilité, par un stockage indépendant d'hélium. Lorsqu'un réchauffage par le moteur cryotechnique n'est pas techniquement ou économiquement réalisable, l'hélium est stocké à température ambiante et à très haute pression (excédant 400 bars), ce qui n'autorise que de faibles capacités de stockage d'hélium au prix de masses et volumes considérablement accrus par rapport à un stockage cryogénique.

La présente invention a pour objet de proposer un système autonome simple, léger et fiable de fourniture de gaz de travail sous pression permettant d'accroître grandement la capacité de stockage.

Pour ce faire, l'invention propose un système comprenant :
- une source de gaz de travail à une température cryogénique, typiquement inférieure à 200 K,
- un conduit de fourniture du gaz de travail à un circuit utilisateur, le conduit ayant une extrémité amont raccordable à la source de gaz et une portion intermédiaire,
- un échangeur de passage de gaz chauds en relation d'échange thermique avec la portion intermédiaire du conduit,
- au moins une source de gaz comburant et au moins une source de gaz carburant,
- au moins un lit de catalyseur balayable par un mélange des gaz comburant et carburant provenant desdites sources pour générer lesdits gaz chauds passant dans l'échangeur et servant à réchauffer le gaz de travail.

La présente invention a pour autre objet l'utilisation d'un tel système pour pressuriser un conteneur de fluide.

L'invention a enfin pour autre objet un étage de lanceur à moteur cryotechnique équipé d'au moins un réservoir d'ergol raccordé au conduit de fourniture de gaz de travail d'un tel système, pour la pressurisation du réservoir d'ergol.

D'autres caractéristiques et avantages de l'invention ressortiront de la description suivante de modes de réalisation, donnés à titre illustratif mais nullement limitatif, faite en relation avec les dessins annexés, sur lesquels :
- la figure 1 est une vue schématique d'un système selon l'invention pour la pressurisation d'un réservoir d'ergol de moteur cryotechnique ;
- la figure 2 est une vue schématique d'un exemple de réalisation d'un système selon l'invention.

Dans la description qui va suivre et sur les dessins, les éléments identiques ou analogues portent les mêmes chiffres de référence, éventuellement indicés.

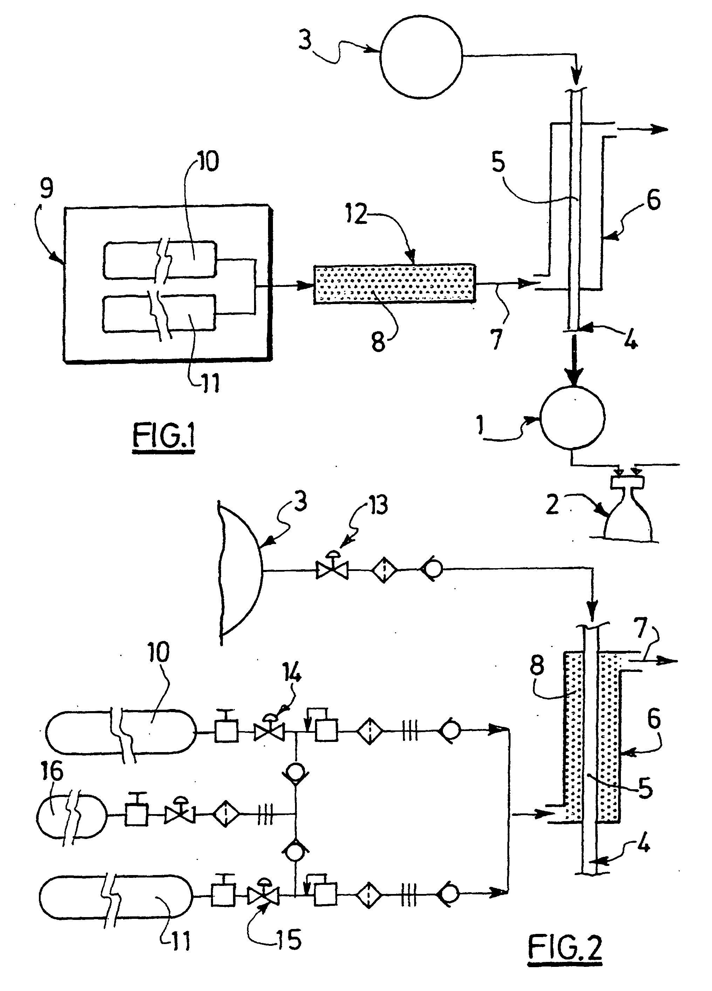

Dans le mode de réalisation représenté schématiquement sur la figure 1, pour la pressurisation d'au moins un réservoir 1 d'ergol, typiquement d'oxygène liquide, d'au moins un moteur cryotechnique 2 d'un étage de lanceur, on utilise de l'hélium stocké sous forme liquide dans au moins un réservoir embarqué 3 et acheminé au réservoir d'ergol 1 par un conduit 4. L'hélium dans le réservoir 3 est supercritique à une température cryogénique inférieure à 100 K, typiquement comprise entre 4 et 90 K, à une pression inférieure à 250 bars, typiquement entre 1 bar et 220 bars.

Selon un aspect de l'invention, le conduit 4 comporte une portion intermédiaire 5 traversant un boîtier échangeur 6 dans lequel on fait passer, typiquement à contre-courant du flux d'hélium dans le conduit 4, un flux de gaz chauds 7.

Ces gaz chauds 7 sont obtenus par combustion catalytique dans au moins un lit de catalyseur 8 d'un mélange de fluides carburant et comburant contenus dans une source 9 de ces fluides.

De façon plus spécifique, la source 9 comporte typiquement au moins deux réservoirs de gaz séparés, l'un 10, contenant le carburant, typiquement un alkyle inférieur, de préférence du méthane, ou de l'hydrogène gazeux, un autre 11 contenant le comburant, typiquement de l'oxygène gazeux. Le catalyseur 8 est typiquement à base de platine, et/ou éventuellement de palladium ou de rhodium, avantageusement sur des supports d'alumine en forme de billes ou de mousse à macropores. En variante, on peut envisager un prélèvement de comburant et/ou de carburant dans les réservoirs d'ergols d'alimentation du moteur cryotechnique 2.

Dans le mode de réalisation représenté sur la figure 1, le catalyseur 8 est disposé dans un boîtier de catalyseur indépendant 12 dont la sortie de gaz chauds est reliée à l'entrée de gaz chauds de l'échangeur 6. Dans le mode de réalisation de la figure 2, le catalyseur 8 est disposé directement dans au moins une partie de l'échangeur 6 concentrique à la portion intermédiaire 5 du conduit de fourniture de gaz de travail 4. Sur cette figure 2 on a représenté les systèmes de vannes 13, 14, 15 de contrôle de flux d'hélium, de carburant et de comburant, provenant respectivement d'un réservoir 3 d'hélium supercritique, typiquement à 20 bars et à une température de 8 K, d'un réservoir 11 d'oxygène, typiquement à 200 bars et 300 K, et d'un réservoir 10 de méthane, typiquement à 200 bars et 300 K, la source de mélange de gaz comburant et carburant étant complétée par un petit réservoir 16 de 5 litres d'hélium à 100 bars et 300 K pour balayer les canalisations des gaz comburant et carburant et des gaz chauds après combustion.

Le système qui vient d'être décrit permet de doser les flux de gaz carburant et comburant pour obtenir des gaz chauds de combustion catalytique à une température modérée , pas trop élevée, typiquement entre 300 K et 1100 K selon la température de l'hélium stocké dans le réservoir 3.

Quoique l'invention ait été décrite en relation avec des modes de réalisation particuliers, elle ne s'en trouve pas limitée mais est susceptible de modifications et de variantes qui apparaîtront à l'homme de l'art dans le cadre des revendications ci-après.

## Revendications

1. Système autonome de fourniture de gaz de travail sous pression, comprenant :
- une source (3) dudit gaz à une température inférieure à 200 K ;
- un conduit (4) de fourniture du gaz de travail à un circuit utilisateur (1,2), le conduit ayant une extrémité amont raccordable à la source de gaz de travail (3) et une portion intermédiaire (5) ; et **caractérisé par**:
- un échangeur (6) de passage de gaz chauds en relation d'échange thermique avec la portion intermédiaire (5) du conduit de gaz (4) ;
- au moins une source (11) de gaz comburant et au moins une source (10) de gaz carburant ; et
- au moins un lit (8) de catalyseur balayable par un mélange des gaz comburant et carburant provenant desdites sources (11,10) pour générer lesdits gaz chauds (7) passant dans l'échangeur (6).

2. Système selon la revendication 1, **caractérisé en ce que** le carburant est un alkyle inférieur.

3. Système selon la revendication 1, **caractérisé en ce que** le carburant est l'hydrogène.

4. Système selon l'une des revendications précédentes, **caractérisé en ce que** le comburant est l'oxygène

5. Système selon l'une des revendications précédentes, **caractérisé en ce que** le catalyseur (8) contient au moins un métal choisi dans le groupe comprenant le platine, le palladium et le rhodium.

6. Système selon l'une des revendications précédentes, **caractérisé en ce que** les sources de gaz carburant et comburant sont des bouteilles de gaz (10, 11).

7. Système selon l'une des revendications précédentes, **caractérisé en ce que** le gaz de travail est l'hélium.

8. Système selon l'une des revendications précédentes, **caractérisé en ce que** l'hélium de la source est à une température entre 4 et 90 K.

9. Utilisation d'un système selon l'une des revendications précédentes pour pressuriser un conteneur de fluide (1).

10. Etage de lanceur comprenant un moteur cryotechnique (2) équipé d'un réservoir d'ergol (1), **caractérisé en ce que** le réservoir d'ergol (1) est raccordé à un conduit (4) de fourniture de gaz de travail d'un système selon l'une des revendications 1 à 8.

## Patentansprüche

1. Selbständiges Arbeitsdruckgasversorgungssystem, umfassend:
- eine Quelle (3) dieses Gases bei einer Temperatur kleiner als 200 K;
- eine Leitung (4), um einen Nutzkreis (1, 2) mit Arbeitsgas zu versorgen, wobei die Leitung ein vorderes Ende, das mit der Arbeitsgasquelle (3) verbunden werden kann, und einen Zwischenabschnitt (5) aufweist; und **gekennzeichnet durch**:
- einen Austauscher (6) mit Heißgasdurchlauf, der mit dem Zwischenabschnitt (5) der Gasleitung (4) in Wärmeaustauschbeziehung steht;
- mindestens eine Verbrennungsstoffgasquelle (11) und mindestens eine Treibstoffgasquelle (10); und
- mindestens ein Katalysatorbett (8), das von einem Gemisch der Verbrennungsstoff- und Treibstoffgasen aus diesen Quellen (11, 10) gespült wird, um die Heißgase (7) zu erzeugen, die den Austauscher (6) durchlaufen.

2. System nach Anspruch 1, **dadurch gekennzeichnet, daß** der Treibstoff ein niederes Alkyl ist.

3. System nach Anspruch 1, **dadurch gekennzeichnet, daß** der Treibstoff Wasserstoff ist.

4. System nach einem der obigen Ansprüche, **dadurch gekennzeichnet, daß** der Verbrennungsstoff Sauerstoff ist.

5. System nach einem der obigen Ansprüche, **dadurch gekennzeichnet, daß** der Katalysator (8) mindestens ein Metall enthält, das aus der Gruppe gewählt wird, die Platin, Palladium und Rhodium umfaßt.

6. System nach einem der obigen Ansprüche, **dadurch gekennzeichnet, daß** die Treibstoff- und Verbrennungsstoffgasquellen Gasflaschen (10, 11) sind.

7. System nach einem der obigen Ansprüche, **dadurch gekennzeichnet, daß** das Arbeitsgas Helium ist.

8. System nach einem der obigen Ansprüche, **dadurch gekennzeichnet, daß** das Helium von der Quelle bei einer Temperatur zwischen 4 und 90 K ist.

9. Anwendung eines Systems nach einem der obigen Ansprüche, um einen Fluidbehälter (1) unter Druck zu setzen.

10. Trägerraketenstufe, umfassend ein kryotechnisches Triebwerk (2), das mit einem Treibstoffbehälter (1) versehen ist, **dadurch gekennzeichnet, daß** der Treibstoffbehälter (1) mit einer Arbeitsgasversorgungsleitung (4) eines Systems nach einem der Ansprüche 1 bis 8 verbunden ist.

## Claims

1. Autonomous system for delivering pressurized working gas, comprising:
- a source (3) of the said gas at a temperature below 200 K;
- a line (4) for delivering the working gas to a user circuit (1, 2), the line having an upstream end that can be connected to the source (3) of working gas and an intermediate portion (5);
and **characterized by**:
- an exchanger (6) for the flow of hot gases in heat-exchange relationship with the intermediate portion (5) of the gas line (4);
- at least one source (11) of oxidizer gas and at least one source (10) of fuel gas; and
- at least one catalyst bed (8) that can be swept by a mixture of the oxidizer and fuel gases coming from the said sources (11, 10) in order to generate the said hot gases (7) flowing through the exchanger (6).

2. System according to Claim 1, **characterized in that** the fuel is a lower alkyl.

3. System according to Claim 1, **characterized in that** the fuel is hydrogen.

4. System according to one of the preceding claims, **characterized in that** the oxidizer is oxygen.

5. System according to one of the preceding claims, **characterized in that** the catalyst (8) contains at least one metal chosen from the group comprising platinum, palladium and rhodium.

6. System according to one of the preceding claims, **characterized in that** the fuel and oxidizer gas sources are gas cylinders (10, 11).

7. System according to one of the preceding claims, **characterized in that** the working gas is helium.

8. System according to one of the preceding claims, **characterized in that** the helium of the source is at a temperature between 4 and 90 K.

9. Use of a system according to one of the preceding claims to pressurize a fluid container (1).

10. Launcher stage comprising a cryotechnic motor (2) equipped with a propellant reservoir (1), **characterized in that** the propellant reservoir (1) is connected to a line (4) for delivering working gas from a system according to one of Claims 1 to 8.
